# FASCICULE DE BREVET EUROPEEN

(11) **EP 2 258 036 B1**
(45) Date de publication et mention de la délivrance du brevet: **09.10.2019**
(21) Numéro de dépôt: 09721249.2
(22) Date de dépôt: 18.03.2009
(51) Int. Cl.: H02M 3/158

(54) **DISPOSITIF DE COMMANDE D'UNE ALIMENTATION A DECOUPAGE DC DC, DU TYPE A N VOIES ENTRELACEES**
ANTRIEBSANORDNUNG EINES SCHALTNETZTEILS DC/DC MIT N VERSCHALTETEN SPEISEWEGEN
DEVICE FOR CONTROLLING A POWER SUPPLY WITH DC DC SPLITTING OF THE TYPE INCLUDING N INTERLACED PATHS

(30) Priorité: 21.03.2008 FR 0801575
(43) Date de publication de la demande: 08.12.2010
(73) Titulaire: PSA Automobiles SA, 78300 Poissy (FR)
(72) Inventeur: CHATROUX, Daniel, F-38470 Teche (FR); DOLHAGARAY, Jean-Claude, F-91400 Saclay (FR); ROY, Francis, F-91940 Les Ulis (FR)
(74) Mandataire: Ménès, Catherine
(86) Numéro de dépôt international: PCT/EP2009/053205
(87) Numéro de publication internationale: WO 2009/115555

(56) Documents cités:
- WO-A-02/47242
- WO-A-2007/148354
- US-A- 5 828 559
- US-A1- 2007 013 350
- CARLOS MARCELO DE OLIVEIRA STEIN ET AL: "A ZCT Auxiliary Commutation Circuit for Interleaved Boost Converters Operating in Critical Conduction Mode", IEEE TRANSACTIONS ON POWER ELECTRONICS, INSTITUTE OF ELECTRICAL AND ELECTRONICS ENGINEERS, USA, vol. 17, no. 6, 1 November 2002 (2002-11-01), XP011078230, ISSN: 0885-8993
- AHMED ELASSER ET AL: "Soft Switching Active Snubbers for DC/DC Converters", IEEE TRANSACTIONS ON POWER ELECTRONICS, INSTITUTE OF ELECTRICAL AND ELECTRONICS ENGINEERS, USA, vol. 11, no. 5, 1 September 1996 (1996-09-01), XP011042995, ISSN: 0885-8993

## Description

La présente invention concerne un système d'alimentation d'une charge comprenant une pile à combustible et un convertisseur à découpage DC DC à n voie entrelacées.

L'invention s'applique notamment à la fourniture d'une tension continue régulée de niveau déterminé, à partir de l'énergie fournie par une pile à combustible.

Les piles à combustibles sont utilisées dans de nombreuses applications. Elles sont par exemple utilisées comme source d'énergie dans les véhicules automobiles électriques, ou pour recharger des batteries, par exemple pour la recharge de batteries de dispositifs portables (téléphones par exemple).

Des alimentations à découpage, DC DC non isolées, encore appelées convertisseurs ou hacheurs, sont habituellement utilisées pour convertir la tension continue fournie par la pile en une autre tension continue, qui peut être plus élevée ou plus basse et qui peut être de même polarité ou de polarité inverse, selon la topologie de l'alimentation. La puissance traitée par l'alimentation dépend de la charge en sortie, c'est-à-dire de l'application qui utilise la tension fournie en sortie.

Dans l'invention, on s'intéresse tout particulièrement aux alimentations à découpage du type à cellules entrelacées. Ces alimentations permettent de réduire l'ondulation de courant en entrée de l'alimentation et en sortie. La réduction de l'ondulation en entrée et en sortie est un critère de qualité d'une alimentation à découpage. Chaque cellule est un convertisseur. La notion d'entrelacement vient de ce que les cellules fournissent en déphasage la puissance vers un condensateur de sortie, qui peut être commun aux cellules ou propre à chaque cellule.

Un tel convertisseur à cellules entrelacées est décrit dans la demande internationale WO 2007/148354.

Les cellules entrelacées sont chacune un convertisseur DC DC. Elles ont toutes la même topologie qui est choisie en fonction de la gamme de puissance et du gain recherchés pour l'application considérée. Les différentes topologies d'alimentation bien connues qui sont utilisées dans ces alimentations, sont les topologies élévateur de tension dites "boost", abaisseur de tension, "buck", inverseur et élévateur/abaisseur de tension "buck-boost", ou les topologies "Cuk" du nom de son inventeur, élévateur/abaisseur de tension ou SEPIC (*"Single ended primary inductor converter"*)*.*

D'une manière commune à ces différentes topologies, chaque cellule de conversion DC DC est un circuit électrique généralement tripôle avec une borne d'entrée, une borne de sortie et une borne commune. Ce circuit électrique comprend au moins un interrupteur et une diode et un élément de stockage d'énergie, typiquement une inductance. La tension d'entrée est appliquée entre la borne d'entrée et le commun. Un condensateur de sortie est connecté entre la borne de sortie et le commun. Le transfert d'énergie de l'entrée vers la sortie se fait par l'intermédiaire de l'élément de stockage d'énergie, qui stocke l'énergie puis la restitue au rythme de la commutation de l'interrupteur à l'état ouvert et l'état fermé. La régulation de tension est assurée par le temps de conduction (état fermé) de l'interrupteur à découpage.

L'interrupteur S est généralement réalisé par un transistor à effet de champ. C'est pourquoi on parle indifféremment d'interrupteur à l'état ouvert, ou bloqué, et à l'état fermé ou passant. Typiquement dans la gamme des tensions d'entrée et de sortie de quelques volts à quelques milliers de Volts, on utilise de préférence un transistor de type IGBT (*Isolated Gate Bipolar Transistor*), capable de supporter des tensions élevées à ses bornes. Cette solution technologique permet d'assurer la fiabilité du convertisseur tout en minimisant le coût des composants.

Le fonctionnement d'une cellule, et celui d'une alimentation à cellules entrelacées vont être rappelés, en relation avec les figures 1a à 1c, détaillant la structure et le fonctionnement d'une cellule BCᵢ, et les figures 2, 3a et 3b détaillant une alimentation comportant trois cellules de ce type, BC₁, BC₂ et BC₃.

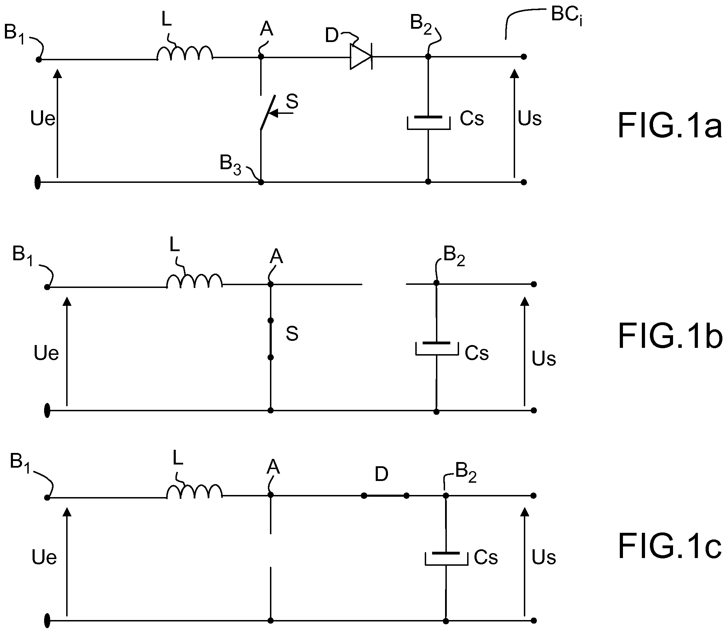

La cellule de conversion BCᵢ, (figure 1a) est un tripôle, avec une topologie en étoile : un interrupteur S, une inductance L et une diode D forment chacun une branche du tripôle. Les branches partent toutes d'un noeud commun A, et leur terminaison forme l'une des trois bornes du tripôle.

Dans l'exemple illustré, la topologie de la cellule BCᵢ est celle d'un convertisseur élévateur de tension BC (boost). L'interrupteur S est connecté entre le noeud A et la borne commune B₃. La diode a son anode connectée au noeud A, et sa cathode connectée à la borne de sortie B₂. L'inductance L est connectée entre la borne d'entrée B₁ et le noeud A.

L'interrupteur à découpage S est commandé de manière habituelle en mode de modulation de largeur d'impulsion, par un signal impulsionnel à fréquence f constante, qui le met alternativement dans un état fermé, pendant un temps de fermeture noté αt et un état ouvert, pendant un temps d'ouverture de durée t-αt, α étant le rapport cyclique entre le temps de fermeture de l'interrupteur et la période complète du cycle (t=1/f).

Les deux phases de fonctionnement d'un tel convertisseur, qui correspondent aux deux états fermé et ouvert de l'interrupteur S, sont les suivantes :
- lorsque l'interrupteur S est fermé : l'inductance L est en parallèle sur la source de tension d'entrée et le courant augmente dans l'inductance. C'est la phase de stockage d'énergie. La diode D est alors bloquée. Le schéma électrique équivalent est illustré sur la figure 1b.
- lorsque l'interrupteur S est ouvert, l'inductance L se trouve en série avec la source de tension d'entrée Uₑ. Le courant traverse l'inductance L et la diode D et le condensateur de sortie Cₛ se charge. C'est la phase de transfert d'énergie. Le schéma électrique équivalent est illustré sur la figure 1c. La tension aux bornes du condensateur de sortie Cₛ devient plus élevée que la tension d'entrée.

Le niveau de la tension de sortie est en pratique fonction des durées des temps d'ouverture et de fermeture de l'interrupteur. Si l'alimentation à découpage travaille à fréquence constante f et en mode de conduction continue (c'est à dire que le courant qui traverse l'inductance ne s'annule jamais), la tension de sortie Us est égale à α^{∗}Ue.

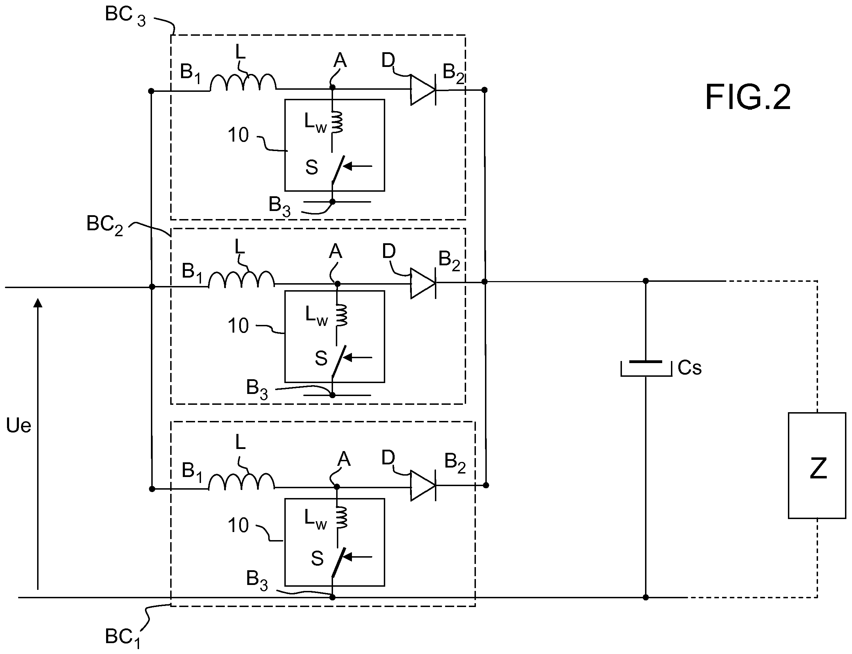

La figure 2 illustre une alimentation à découpage à n cellules entrelacées, chargeant un unique condensateur de sortie Cₛ.

Dans l'exemple, n=3 cellules BC₁, BC₂, BC₃ identiques (L, S, D) et en parallèle : leurs bornes B₁ sont reliées ensemble ; leurs bornes B₂ sont reliées ensemble ; leurs bornes B₃ sont reliées ensemble. L'alimentation comprend un unique condensateur de sortie C_{S}, connecté entre les bornes de sortie B₂ et de commun B₃ de chaque cellule. La tension d'entrée Uₑ est appliquée entre les bornes d'entrée B₁ et de commun B₃ de chaque cellule.

Dans cette figure, les cellules ont la même topologie de convertisseur, i.e. élévateur de tension (boost), que la cellule représentée à la figure 1a.

Les n=3 interrupteurs à découpage S sont chacun commandés comme indiqué en relation avec les figures 1a à 1c, à la même fréquence de découpage f, mais les différentes voies sont décalées les unes par rapport aux autres d'un décalage temporel de durée fixe, correspondant à un déphasage entre chaque cellule de 2π/nf. La fréquence des courants et des tensions vue par la charge est ainsi n fois supérieure à ce qui est obtenu avec une unique cellule. Les ondulations en entrée et dans le condensateur de sortie sont réduites.

Dans l'invention, on s'intéresse notamment à un perfectionnement de ces alimentations à n cellules entrelacées, qui permet avantageusement de faciliter le placement des différents composants eu égard à l'évacuation thermique, et de diminuer voire annuler l'ondulation de tension ou courant en entrée et en sortie, dûe aux inductances de câblage amenées par les connexions à réaliser entre les différents éléments de l'alimentation. Ce sont notamment les inductances de câblage L_{w} en série entre l'interrupteur S et la diode D de chaque cellule, qui perturbent la boucle de transfert de charge (interrupteur S, diode D, condensateur de sortie Cs). Ce sont aussi, lorsque l'alimentation comprend un condensateur de sortie par cellule, les inductances de câblage entre les condensateurs de sortie (non illustré sur la figure 2). Dans ce perfectionnement, l'interrupteur de découpage S de chaque cellule est placé dans un circuit résonnant, représenté schématiquement par un simple rectangle référencé 10 sur la figure 2, et qui contient l'interrupteur S.

Ce circuit résonant 10 permet un blocage de l'interrupteur de découpage à zéro de courant, pour passer de la phase de stockage à la phase de transfert d'énergie. Le blocage intervient aussi à zéro de tension. L'effet technique produit par un blocage sans pertes est notamment de rendre sans effets les inductances de câblage de la boucle de transfert de charge (T, D, C) sur le rendement de l'alimentation. Ainsi, même si les inductances de câblage sont élevées, elles n'interviennent plus dans la conversion.

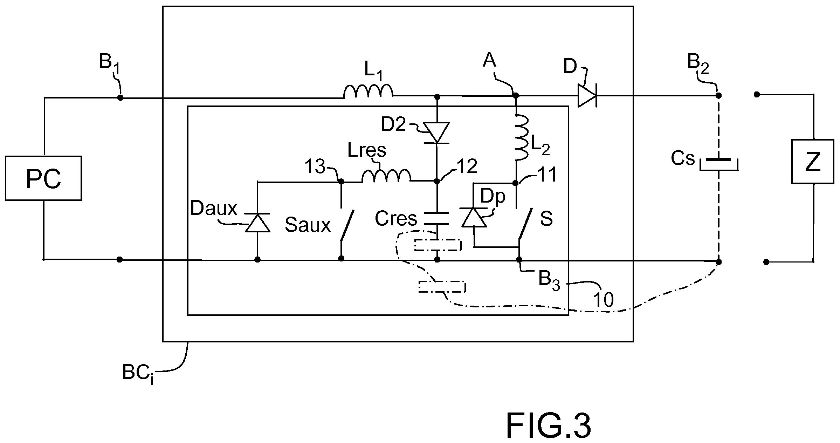

La figure 3 détaille pour une cellule d'alimentation un mode de réalisation de ce circuit résonnant 10 applicable à la topologie d'alimentation représentée à la figure 2, ou une topologie d'alimentation similaire, mais avec un condensateur de sortie par cellule.

Le rendement de l'alimentation est amélioré par rapport aux structures entrelacées sans résonnance. A titre de comparaison, dans une alimentation à cellules entrelacées sans résonnance, il est habituel d'obtenir des rendements de l'ordre de 92 % à 93 %, à pleine puissance. Avec la résonnance, ces rendements à pleine puissance atteignent 96%, soit un gain de l'ordre de 3 % à 4 %.

On entend habituellement par pleine puissance, la puissance maximale transférée par le convertisseur, la limite étant fixée par la nature des composants utilisés.

Dans la pratique, une alimentation ne travaille pas toujours à pleine puissance, c'est-à-dire que le courant qui est appelé par la charge peut varier. Cela peut dépendre de l'application, car une alimentation est conçue pour une certaine plage de puissance, qui permet qu'elle soit utilisée pour différentes applications. Mais ensuite, toutes les applications n'ont pas les mêmes besoins en puissance. En outre, la puissance requise par une application donnée peut varier avec le temps.

Cependant, si l'alimentation ne travaille pas à pleine puissance, le gain en rendement obtenu avec la structure entrelacée à résonnance est moindre, voire s'inverse. Ceci peut s'expliquer par le fait qu'un circuit résonnant qui comprend par définition des éléments résonnants, - inductance de résonnance et condensateur de résonnance-, est le siège de pertes de puissance propres. L'importance de ces pertes ne dépend que du niveau de tension de sortie qui va charger le condensateur de résonance. L'énergie traitée par le circuit résonnant dépend en effet de la tension de sortie qui charge le condensateur de résonance. Cette tension de sortie modifie l'énergie stockée par ce condensateur de résonnance, et modifie donc l'énergie que traite le circuit résonant de la cellule. Ces pertes sont indépendantes de la puissance traitée par la cellule. On comprend donc que selon les conditions d'utilisation de l'alimentation, ces pertes des éléments résonnants ont plus ou moins d'importance.

Pour illustrer ce problème, le tableau inséré ci-après montre le rendement η d'une alimentation donnée à n cellules entrelacées à circuit résonnant (n=3), en fonction de la puissance traitée par l'alimentation.

La puissance P traitée par l'alimentation, dépend typiquement du niveau de sortie demandé Vs et du courant Is appelé par la charge de sortie, c'est-à-dire des conditions d'utilisation de l'alimentation.

Ce tableau montre le rendement η de l'alimentation, correspondant au rapport entre la puissance de sortie et la puissance en entrée, en fonction du niveau de tension de sortie requis VS, du niveau VE de tension en entrée, et du niveau de puissance traitée P par l'alimentation.

| **P (kilowatts)** | **VE (Volts)** | **VS (Volts)** | **η (pour cent)** |
|---|---|---|---|
| **2 kW** | **200 V** | **360 V** | **90,5 %** |
| | | **300 V** | **91,9 %** |
| | | **245 V** | **94,5 %** |
| **5 kW** | **170 V** | **360 V** | **94,4 %** |
| | | **300 V** | **95,6 %** |
| | | **245 V** | **96,3 %** |
| **8 kW** | **140 V** | **360 V** | **95,2 %** |
| | | **300 V** | **95,6 %** |
| | | **245 V** | **95,9 %** |
| **9 kW** | **140 V** | **360 V** | **95 %** |
| | | **300 V** | **95,5 %** |
| | | **245 V** | **96 %** |

Dans ce tableau, pour l'alimentation prise en exemple, avec laquelle on a obtenu ces chiffres, la puissance maximale est de 9kW.

On peut voir dans ce tableau que le rendement varie avec les conditions d'utilisation : le rendement se dégrade avec une puissance électrique traitée plus faible. Notamment, à faible puissance traitée par l'alimentation, 2kW dans l'exemple du tableau, les rendements deviennent inférieurs à ceux des alimentations sans résonnance.

Si le niveau de perte de l'ensemble des circuits résonnants du convertisseur peut être limité à des niveaux de l'ordre de 1% à 2% de la puissance totale du convertisseur par l'utilisation de condensateurs performants de type polypropylène à armature à faible résistance série et des inductances planars, il reste que l'on observe une chute du rendement quand l'alimentation ne travaille pas à pleine puissance. Typiquement, pour des pertes fixes dans les éléments résonnants correspondant à 1,5 % du rendement à pleine puissance, ces pertes fixes correspondent à une chute de rendement de 4,5% lorsque le convertisseur travaille au tiers de sa puissance.

L'invention a ainsi plus particulièrement pour objet de traiter du rendement dégradé d'une alimentation à cellules entrelacées, dû à des pertes fixes de puissance dans le circuit résonnant.

Elle a plus généralement pour objet d'améliorer le rendement d'une alimentation à cellules entrelacées quel que soit le niveau de puissance traité par l'alimentation, dès lors que la structure de l'alimentation entraine des pertes de puissance, de niveau constant, dont la part augmente donc en proportion lorsque le puissance traitée par l'alimentation baisse.

Une idée à la base de l'invention est de moduler le nombre de voies de conversion qui sont réellement activées parmi les n voies de l'alimentation, en fonction du niveau de puissance traitée par le convertisseur, en sorte de baisser la part des pertes fixes avec la baisse de puissance traitée.

L'invention concerne donc un système d'alimentation d'une charge comprenant une pile à combustible suivie d'au moins une alimentation à découpage DC DC non isolée, du type à n cellules entrelacées, n entier au moins égal à 2, pour fournir un niveau régulé de tension continue à ladite charge sous le contrôle d'un dispositif de commande, conformément à l'objet de la revendication 1.L'invention concerne aussi système d'alimentation comportant une alimentation à découpage DC DC non isolée comprenant n cellules formant chacune une voie de conversion d'une tension d'entrée vers une tension de sortie, dont les voies peuvent être activées ou inhibées par un tel dispositif de commande.

D'autres avantages et caractéristiques de l'invention sont détaillés dans la description suivante en référence aux dessins illustrés d'un mode de réalisation de l'invention, donné à titre d'exemple non limitatif. Dans ces dessins :
- les figures 1a, 1b, 1c déjà décrites illustrent une cellule élévateur de tension de type boost, et ses deux phases de fonctionnement;
- la figure 2 illustre un exemple d'alimentation à découpage DC DC non isolée à cellules entrelacées, à laquelle un dispositif de commande selon l'invention peut s'appliquer, et qui comprend de préférence dans chaque cellule, un circuit résonnant dans lequel l'interrupteur de commutation est placé ; et

- la figure 3 est un schéma électrique détaillé d'un mode de réalisation d'un tel circuit résonnant,

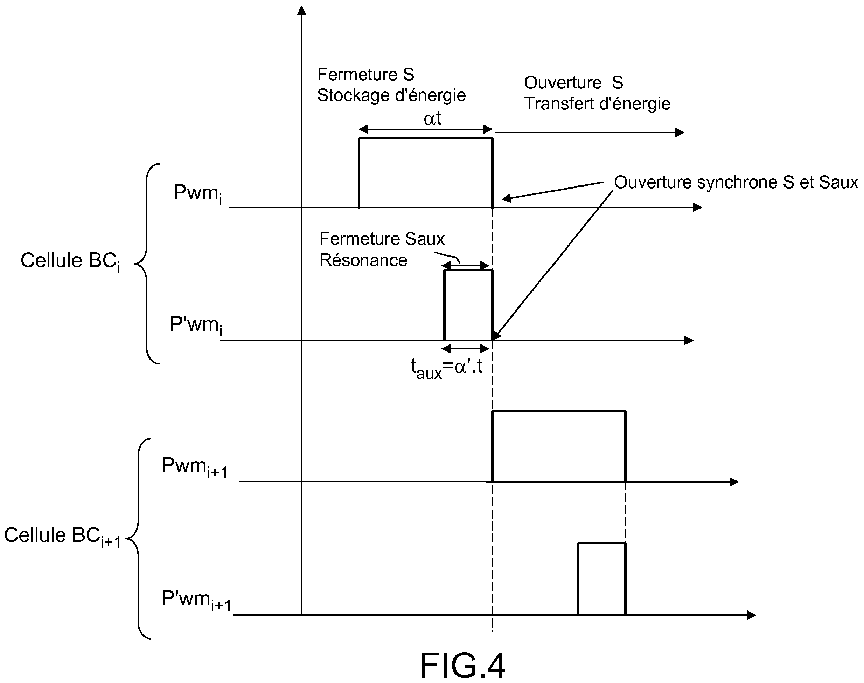

- la figure 4 est un chronogramme des signaux de commande des interrupteurs S et des interrupteurs auxiliaires Saux de deux cellules de conversion à circuit résonant correspondantes, utilisées dans l'alimentation illustrée sur la figure 2 ou 3,

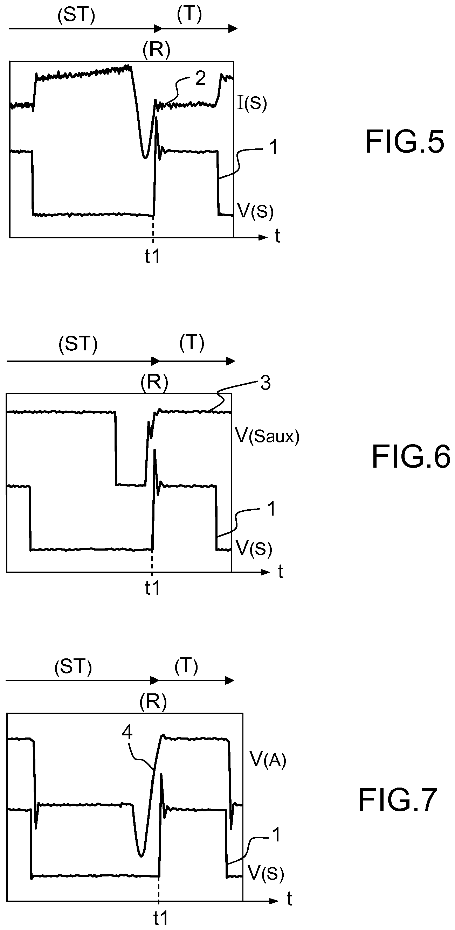

- les figures 5, 6, 7 illustrent les formes d'ondes de courant et de tension correspondantes obtenues dans une cellule ;

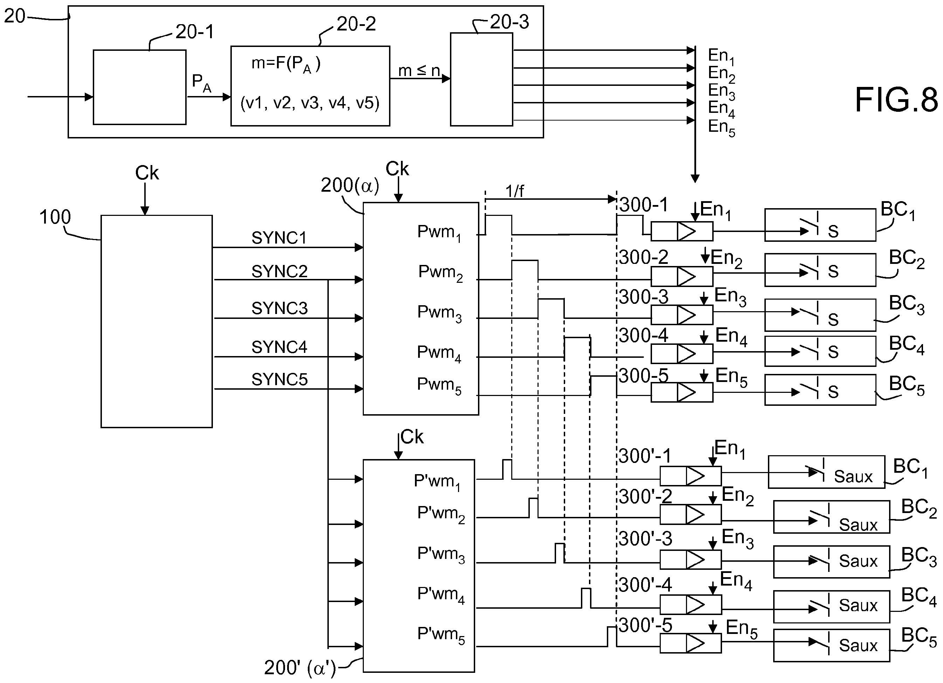

- la figure 8, est un schéma général d'un dispositif de commande d'une alimentation à n=5 cellules entrelacées selon la topologie illustrée sur les figures 2 et 3, intégrant un circuit de contrôle du nombre de voies actives (m) selon l'invention ;

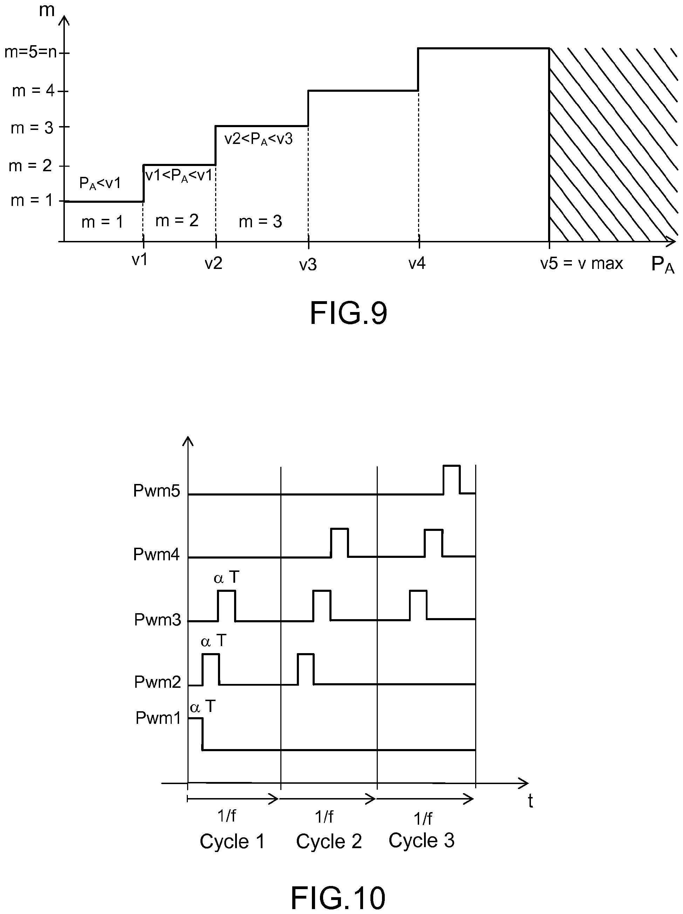

- la figure 9, illustre la fonction de détermination du nombre de voies actives (m) en fonction de la puissance traitée par l'alimentation, appliquée dans l'invention;
- la figure 10, illustre un principe de roulement des m voies actives sur les n voies disponibles d'une alimentation, selon un perfectionnement de l'invention ; et

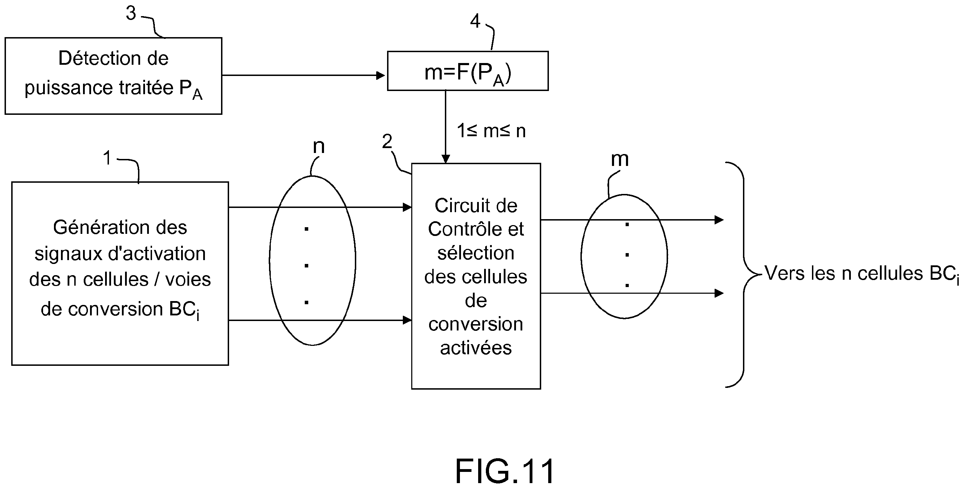

- la figure 11 est un schéma-bloc illustrant le principe général de contrôle de voies actives selon l'invention.

L'invention s'applique à une alimentation à découpage DC DC non isolée à n cellules BCᵢ entrelacées, avec n entier au moins égal à 2. Elle s'applique avantageusement à une alimentation à n cellules entrelacées, à résonnance, telles qu'illustrées aux figures 2 et 3.

Chaque cellule est comparable à une voie de conversion. Cette voie de conversion est active dès lors que dans un cycle de conversion de l'alimentation, on a une phase de stockage d'énergie dans la cellule, obtenue par la commande à l'état fermé de l'interrupteur à découpage S (figures 2, 3 et 4). Le retour à l'état ouvert déclenche la phase de transfert d'énergie en sortie. Si l'interrupteur n'est jamais commuté à l'état fermé ou passant, il n'y a pas de phase de stockage d'énergie, et par suite il ne peut y avoir transfert d'énergie. La voie de conversion est inactive, ou inhibée.

Selon l'invention, et comme illustré sur le schéma de principe de la figure 11, on choisit de pouvoir activer tout ou partie des voies de l'alimentation de manière conditionnelle, en fonction de la puissance traitée ou du courant dans l'alimentation. Au circuit 1 de commande habituel de l'alimentation, qui fournit donc les signaux de commande à appliquer aux n voies de l'alimentation, pour obtenir le fonctionnement déjà décrit en relation avec la figure 4 notamment, on ajoute un circuit 2 de contrôle d'activation des voies, qui, sur la base d'une détection de puissance ou du courant traitée par l'alimentation, va permettre ou empêcher le transfert vers les cellules, de ces signaux de commande. Plus précisément, un circuit de calcul 4 détermine en temps réel un nombre m de voies à activer en fonction de la puissance ou du courant détecté par un circuit de détection 3 approprié, nombre qu'il fournit au circuit 2 de contrôle d'activation des voies.

Avant de décrire plus en détail un dispositif de commande selon l'invention, il convient de décrire la structure de l'alimentation, avec son fonctionnement et les signaux de commande correspondants.

On a vu que l'invention s'appliquait tout particulièrement à une alimentation à n cellules entrelacées telle qu'illustrée sur la figure 2, dans laquelle, l'interrupteur à découpage S de chaque cellule est placé dans un circuit résonnant 10, tel que le circuit résonnant détaillé sur la figure 3.

L'interrupteur à découpage S d'une cellule est connecté entre le noeud A et le noeud B₃, comme décrit en introduction en référence à la figure 1a. Lorsqu'il est commuté à l'état fermé, il ferme le chemin de conduction entre ces deux noeuds A et B3, rebouclant ainsi l'inductance L sur la source de tension Uₑ : c'est la phase de stockage d'énergie (figure 1b). Lorsqu'il est commuté à l'état ouvert (ou bloqué), il ouvre ce chemin de conduction entre A et B₃, ce qui déclenche la phase de transfert d'énergie dans le condensateur de sortie Cₛ (figure 1c).

La fonction du circuit résonnant 10 est de permettre la commutation à l'état ouvert de l'interrupteur S à zéro de courant. Le passage de l'état fermé à l'état ouvert se fait aussi à zéro de tension. L'ouverture de l'interrupteur S est ainsi effectuée sans pertes, ce qui permet à la boucle de transfert d'énergie (interrupteur S, diode D, condensateur de sortie Cs) de ne pas subir de pertes dans les inductances de câblage.

Le circuit résonant comprend typiquement une inductance et un condensateur de résonnance. Il comprend en outre un interrupteur auxiliaire Saux, par lequel la phase de résonance est déclenchée, pendant la phase de stockage d'énergie, alors que l'interrupteur S est fermé.

La phase de résonance permet d'annuler le courant dans l'interrupteur S. Ce dernier peut alors être commuté à l'état ouvert, faisant passer l'alimentation en phase de transfert d'énergie.

Elle permet aussi avantageusement d'annuler le courant dans l'interrupteur auxiliaire Saux, qui peut être commuté à l'état bloqué sans pertes (à zéro de courant).

Dans l'exemple de réalisation illustré sur la figure 3, le circuit résonnant 10 d'une cellule BCi comprend :
- une inductance L₂ connectée en série entre l'interrupteur S et le noeud A, et une diode Dp connectée en parallèle sur l'interrupteur avec son anode connectée au noeud B₃ et sa cathode connectée au point de connexion 11 entre l'interrupteur S et l'inductance L₂;
- une diode D₂ et un condensateur de résonance Cres connectés en série entre les noeuds A et B₃;
- une inductance Lres et un interrupteur auxiliaire Saux en parallèle sur le condensateur de résonance Cres ; l'inductance étant connectée au point de connexion 12 entre le condensateur de résonance Cres et ladite deuxième diode;
- une deuxième diode Daux en parallèle sur l'interrupteur auxiliaire Saux, avec sa cathode connectée au point de connexion 13 entre l'interrupteur auxiliaire Saux et l'inductance Lres.
En pratique les diodes Daux et Dp peuvent être chacune réalisée par un composant discret placé en parallèle sur le transistor IGBT associé, c'est à dire en parallèle sur Saux et S respectivement, ou bien intégrée avec ce transistor dans un même boîtier.

Les différentes phases de fonctionnement de la cellule BCᵢ avec le circuit résonnant 10 sont illustrées sur les figures 5 à 7 :
- Phase de stockage d'énergie ST : l'interrupteur S est commandé à l'état fermé (passant). La diode D se bloque. L'inductance L de la cellule emmagasine l'énergie électrique sous forme électromagnétique.
- Phase de résonance R : L'interrupteur Saux est commuté à l'état fermé (passant). La diode D est bloquée ; l'interrupteur S est toujours fermé.

La commutation à l'état fermé de l'interrupteur Saux, fait s'établir une résonance entre le condensateur Cres et l'inductance Lres : la tension aux bornes du condensateur Cres chute jusqu'à s'inverser; et la diode D2 est mise en conduction lorsque la tension de sa cathode (noeud 12) devient inférieure à celle de son anode (noeud A). Le courant qui traverse la diode D2, permet d'annuler le courant dans l'interrupteur S. L'interrupteur S peut être commuté à l'état ouvert, faisant passer la cellule de conversion en phase de transfert d'énergie.

Lorsque le courant dans l'interrupteur S s'annule, la diode en parallèle Dp permet de laisser passer le courant inverse et de terminer la phase de résonance, avec l'inductance L2, qui intervient alors puisque la diode Dp conduit : la tension aux bornes de l'interrupteur S est également nulle, par la conduction de Dp. La commutation de l'interrupteur S à l'état ouvert peut ainsi être une commutation douce, sans pertes d'énergie.

Avec l'interrupteur S commuté à l'état ouvert, on entre dans la phase de transfert d'énergie :

### -Phase de transfert d'énergie T :

La diode D conduit, l'interrupteur S est ouvert, et l'interrupteur Saux est ouvert. L'énergie est transférée de l'inductance L au condensateur de sortie Cs. Le condensateur Cres est chargé sous la tension de sortie Uₛ.

La commande de chacune des cellules d'une telle alimentation, nécessite en pratique deux signaux de commande, un pour chacun des interrupteurs S et Saux, de manière à commuter de manière appropriée à l'état fermé et ouvert ces deux interrupteurs, et obtenir le fonctionnement décrit.

On note Pwmi et P'wmi, les signaux de commande de l'interrupteur à découpage S et de l'interrupteur auxiliaire d'une cellule BCᵢ de l'alimentation, comportant n cellules BCᵢ (i=1 à n).

Ces signaux sont en pratique générés de manière connue par des circuits tels que des circuits de modulation de largeur d'impulsion, à la fréquence de découpage f et des circuits de découpage temporel de durée fixe en sorte que les différentes voies sont décalées les unes par rapport aux autres d'un décalage temporel de durée fixe, avantageusement égal à 2π/nf.

Dans une mise en oeuvre simple, les différentes durées (temps de fermeture des interrupteurs S et Saux, ou décalage 2π/nf) peuvent être générées par un circuit programmable, sur la base de simulations.

Ces signaux de commande sont illustrés sur la figure 4, pour deux cellules de conversion successives BCᵢ et BCᵢ₊₁. Ils ont la même fréquence f. Les signaux Pwmᵢ et P'wmᵢ d'une cellule BCᵢ sont synchronisés en sorte de commander de manière synchrone l'ouverture des interrupteurs S et Saux. C'est le rapport de cycle, respectivement α+α' et α', qui change entre les deux signaux.

De manière plus détaillée, et comme illustré sur ce chronogramme, dans chaque cellule :
- l'interrupteur Saux est commandé par un signal de commande P'wmᵢ tel que l'interrupteur Saux conduit (est fermé) pendant une durée fixe tₐᵤₓ=α't.
- l'interrupteur S est commandé par un signal Pwmᵢ tel que l'interrupteur S conduit avant l'interrupteur Saux, pendant une durée αt et pendant la durée tₐᵤₓ=α't.
- les deux interrupteurs S et Saux passent à l'état ouvert (ou bloqué) de manière synchronisée, marquant la fin de la phase de stockage et le début de la phase de transfert d'énergie, pour la voie correspondante.

Considérons une alimentation avec la structure qui vient d'être décrite. Supposons qu'elle comporte n=5 cellules de conversion, que l'on note BC₁ à BC₅.

Un circuit de génération des signaux de commande des interrupteurs à découpage S et des interrupteurs auxiliaires Saux pour ces cinq cellules de conversion BC₁ à BC₅ est illustré à titre d'exemple sur la figure 8. Dans cet exemple, on a considéré des rapports de cycle et des décalages temporels fixés, à partir de résultats de simulation, en sorte que les signaux ont les formes illustrées sur la figure 4.

De tels signaux sont habituellement générés au moyen principalement de circuits de modulation d'impulsion notés 200 et 200', sur la base de signaux de synchronisation SYNC1 à SYNC5 typiquement fournis par un circuit programmable 100, à partir d'un signal d'horloge CK. Les circuits de modulation en impulsion sont dans l'exemple configurés de manière à fournir les signaux de commande respectifs avec le rapport de cycle voulu, soit α pour les signaux notés Pwm₁ à Pwm₅ appliqués aux interrupteurs à découpage, et α' pour les signaux notés P'wm₁ à P'wm₅ appliqués aux interrupteurs auxiliaires des circuits résonnants. Le circuit programmable est configuré pour obtenir le décalage temporel voulu entre les signaux de synchronisation (2π/nf, avec ici n=5).

Ils sont appliqués aux interrupteurs respectifs S et Saux au moyen d'amplificateurs de courant, encore appelés drivers, suivant la terminologie anglo-saxonne, qui sont notés 300-1 à 300-5 pour ceux pilotant les interrupteurs à découpage S et 300'-1 à 300'-5 pour les interrupteurs auxiliaire de résonnance Saux.

Dans l'invention, pour optimiser le rendement de cette alimentation, compte tenu des pertes fixes dans les circuits résonnants, le dispositif de commande comprend en outre un circuit 20 de contrôle du nombre de voies de conversion activées, en fonction de la puissance P_{A} ou du courant traité par l'alimentation, de manière à activer m voies, sur les n voies de l'alimentation, où m prend une valeur inférieure ou égale à n, selon la valeur de la puissance P_{A} ou du courant détecté. Dans l'exemple, n= 5.

Le circuit de contrôle comprend un circuit 20-1 de mesure de la puissance ou du courant traité, pour fournir une valeur P_{A}, un circuit 20-2 de calcul du nombre de voies de conversion à activer en fonction de cette valeur, et un circuit 20-3 de génération des signaux d'activation/inhibition des voies de conversion.

Le circuit 20-1 de mesure de la puissance traitée fournit une valeur P_{A}. Ce circuit de mesure ou détection de puissance correspond au circuit 3 de la figure 11. La mesure de puissance peut typiquement être obtenue par une mesure du courant dans la charge Z de sortie de l'alimentation (figure 2) et une mesure de la tension à ses bornes.

Le circuit 20-2 est un circuit de calcul de la valeur de m en fonction la puissance détectée P_{A}. Il correspond au circuit 4 de la figure 11. Il met en oeuvre une fonction F(P_{A}), en marches d'escalier : si n est le nombre de voies de l'alimentation, chaque marche de la fonction associe une valeur de m sur l'espace des entiers compris entre 1 et n et une plage de puissance délimitée par deux valeurs de seuil.

Le nombre de marches de la fonction F(Pa) est égal au nombre n de voies.

Cette fonction F(Pa) est illustrée sur la figure 9, pour n = 5.

Un circuit de calcul 20-2 correspondant peut être ainsi simplement réalisé par un circuit de comparaison de la valeur P_{A} à des valeurs de seuil v1, v2, v3, v4, v5, pour fournir une valeur de m, en fonction de la plage de puissance dans laquelle se trouve la puissance détectée.

Les valeurs de seuil sont en pratique déterminées par simulation pour une alimentation donnée, et en fonction du circuit 20-1 de mesure de puissance utilisé.

De façon générale, si on considère n valeurs de seuil classées par ordre croissant de la première, égale à la plus petite valeur v1, à la nième, égale à la plus grande valeur vₙ, le circuit met en oeuvre les règles suivantes :
- m égal 1 tant que le niveau détecté P_{A} est inférieur à la première valeur de seuil (v₁);
- m égal à i, tant que ledit niveau détecté est inférieur à la i-1-ième valeur de seuil (vᵢ₋₁) et inférieur à la i-ième valeur de seuil (vᵢ), pour i entier compris entre 2 et n.

La valeur vₙ correspond de préférence à la puissance maximale de l'alimentation.

Le circuit de calcul 20-2 fournit le nombre m calculé à un circuit de contrôle des voies 20-3 (circuit 2 sur la figure 11). Ce circuit de contrôle active un état correspondant d'un signal d'inhibition pour chaque voie/cellule. Dans l'exemple on a ainsi 5 signaux En1 à En5 : Ce signal est appliqué en pratique sur une entrée d'inhibition des amplificateurs de courant (300-i, 300'-i) associés aux interrupteurs S et Saux de la cellule respective BCᵢ. Parmi ces 5 signaux, m signaux activent les amplificateurs correspondants, et n-m les désactivent.

En pratique la détection et la gestion du nombre m de voies sont réalisées en temps réel, en synchronisme avec les cycles de conversion. En d'autres termes, on définit la valeur de m applicable à chaque cycle de conversion. On peut prévoir de faire une détection sur une période plus longue. La valeur de m calculée pour un cycle de détection sera alors appliquée sur plusieurs cycles de conversion consécutifs.

Dans l'exemple illustré sur la figure 10, on a ainsi m=3 parmi 5, et cette valeur m=3 est appliquée sur trois cycles de conversion consécutifs : cycle 1, cycle 2 et cycle 3.

Dans une mise en oeuvre de base de l'invention, le circuit de contrôle des voies (circuit 20-3 sur la figure 8, ou circuit 1 sur la figure 11) détermine quelles voies il active, et il laisse les autres désactivées : les interrupteurs des voies désactivées restent ouverts ou non passants.

Ce faisant, les pertes thermiques de l'alimentation ne sont plus uniformément réparties dans l'espace.

Selon un perfectionnement de l'invention illustré sur la figure 10, le circuit de contrôle des voies effectue un roulement des m voies à activer sur les n voies disponibles de l'alimentation, dès lors que m est différent de n. Les règles de permutation peuvent être plus ou moins complexes. Elles dépendent du nombre de possibilités de permutation offertes, compte-tenu de l'écart entre m et n.

Selon un autre aspect de l'invention, et s'agissant d'une application à une alimentation comportant un circuit résonnant 10 tel qu'illustré et décrit en relation avec les figures 3a et 3b, on prévoit en outre un élément de maintien de la charge du condensateur de résonnance Cres du circuit résonant 10.

En effet, pour une cellule qui n'est pas activée pendant un ou plusieurs cycles de conversion, il est intéressant de limiter la décharge du condensateur de résonnance Cres par des courants parasites. Le maintien à l'état chargé de ce condensateur permettra d'assurer la commutation sans pertes de l'interrupteur à découpage S, au prochain cycle de conversion pour lequel la voie sera à nouveau activée.

Cet élément de maintien est avantageusement une résistance connectée entre la borne 12 du condensateur de résonnance et une borne de sortie B2 de chaque cellule de l'alimentation. Elle aura de préférence une valeur de plusieurs centaines de kiloohms.

En pratique on notera que pendant les temps d'arrêt ou d'inhibition de voies du convertisseur, le gain en ondulation en entrée et en sortie de l'alimentation est moindre que lorsque toutes les voies sont actives. Ceci est cependant acceptable, car cela correspond à des conditions d'utilisation de l'alimentation à puissance réduite et par suite, à élévation de température réduite.

L'invention a été décrite à propos d'alimentations non isolées mais elle pourrait s'appliquer également à des alimentations avec isolement (par transformateur).

## Revendications

1. Système d'alimentation d'une charge (Z) comprenant une pile à combustible (PC) suivie d'au moins une alimentation à découpage DC DC non isolée, du type à n cellules entrelacées, n entier au moins égal à 2, pour fournir un niveau régulé de tension continue à ladite charge sous le contrôle d'un dispositif de commande, chaque cellule formant chacune une voie de conversion d'une tension d'entrée vers une tension de sortie, le dispositif de commande comprenant un circuit de contrôle (20) d'un nombre de voies à activer en fonction d'un niveau de puissance ou de courant (PA) dans l'alimentation, faisant que pour un nombre m de voies à activer strictement inférieur à n, ledit circuit de contrôle du nombre m de voies activées, applique un mécanisme de roulement entre les n voies disponibles, fournissant n signaux d'activation (Pwm1, Pwm2, Pwm3,...,Pwmn) modulés en impulsion de même fréquence de découpage f, et décalés les uns par rapport aux autres d'un décalage temporel fixe, chacun pour commander un interrupteur à découpage (S) d'une cellule (BCᵢ), faisant que le circuit de contrôle (20), pilote un circuit d'inhibition (300-1) de la transmission à chaque cellule du signal d'activation correspondant, tel qu'à chaque instant, seuls m signaux d'activation parmi n soient transmis, **caractérisé en ce que** l'interrupteur à découpage (S) de chaque cellule étant placé dans un circuit résonnant (10) d'aide à la commutation comprenant un interrupteur auxiliaire (Saux) de déclenchement d'une phase de résonnance (R), ledit dispositif de commande fournissant n signaux d'activation (Pwm1', Pwm2', Pwm3',...,Pwmn') supplémentaires modulés en impulsion de même fréquence de découpage f, et décalés les uns par rapport aux autres d'un décalage temporel fixe, chaque signal d'activation commandant le transistor auxiliaire (Saux) d'une cellule correspondante, et un circuit d'inhibition (300'-1) de la transmission desdits signaux d'activation supplémentaires tel qu'à chaque instant, seuls m signaux d'activation parmi n soient transmis.

2. Système d'alimentation selon la revendication 1, **caractérisé en ce que** ledit circuit de contrôle (20) comprend des moyens (20-1) de détection de la puissance ou du courant consommé dans ladite alimentation, et des moyens (20-2) pour classer le niveau détecté, par rapport à une suite ordonnée de n valeurs de seuils (v1,...v5), permettant de faire correspondre un nombre m de voies à activer au classement résultant, m entier et 1 ≤ m ≤ n.

3. Système d'alimentation selon la revendication 2, **caractérisé en ce que** les dits moyens pour classer le niveau détecté, déterminent n valeurs de seuil classées par ordre croissant de la première, plus petite valeur, à la nième, plus grande valeur, et appliquent les règles suivantes :
- m égal 1 tant que ledit niveau détecté est inférieur à la première valeur de seuil (v₁);
- m égal à i, tant que ledit niveau détecté est supérieur à la i-1-ième valeur de seuil (vᵢ₋₁) et inférieur à la i-ième valeur de seuil (vᵢ), pour i entier compris entre 1 et n.

4. Système d'alimentation selon la revendication 3, **caractérisé en ce que** la n-ième valeur (vₙ), correspond à une puissance ou un courant maximum dans l'alimentation.

5. Système d'alimentation selon l'une quelconque des revendications précédentes, dans lequel le circuit résonnant de chaque cellule comprend un condensateur de résonnance (Cres), **caractérisé en ce qu'**il comprend en outre un élément de maintien (R) de la charge du condensateur de résonnance.

6. Système d'alimentation selon la revendication 7, **caractérisé en ce que** ledit élément de maintien est une résistance (R) connectée entre le condensateur et une borne de sortie (B2) de l'alimentation, ladite résistance ayant de préférence une valeur de plusieurs centaines de kiloohms.

7. Système d'alimentation selon l'une quelconque des revendications précédentes, dans laquelle lesdites cellules sont du type élévateur de tension.

8. Système d'alimentation selon l'une quelconque des revendications 1 à 6, dans laquelle lesdites cellules sont du type abaisseur de tension.

9. Système d'alimentation selon l'une quelconque des revendications 1 à 6, dans laquelle lesdites cellules sont du type inverseur et/ou abaisseur/élévateur de tension.

## Patentansprüche

1. Netzteilsystem einer Last (Z), das eine Brennstoffzelle (PC) umfasst, auf die mindestens ein nicht isoliertes Schaltnetzteil DC/DC vom Typ mit n verschalteten Zellen folgt, wobei n eine Ganzzahl ist, die mindestens gleich 2 ist, um einen regulierten Gleichspannungspegel zu der Last unter der Steuerung einer Schaltvorrichtung zu liefern, wobei jede Zelle einen Umwandlungsweg einer Eingangsspannung zu einer Ausgangsspannung bildet, wobei die Schaltvorrichtung eine Steuerschaltung (20) mit einer Anzahl von Wegen umfasst, die in Abhängigkeit von einem Leistungs- oder Stromniveau (P_{A}) in dem Netzteil zu aktivieren ist, so dass eine Anzahl von m von Wegen, die zu aktivieren sind, die strikt kleiner ist als n, die Steuerschaltung der Anzahl von m aktivierten Wegen einen Umlaufmechanismus zwischen den n verfügbaren Wegen anwendet, der n impulsmodulierte Aktivierungssignale (Pwm1, Pwm2, Pwm3, ..., Pwmn) mit derselben Taktfrequenz f liefert, und die voneinander um einen fixen zeitlichen Versatz versetzt sind, jeweils, um einen Schalter (S) einer Zelle (BCᵢ) zu steuern, der bewirkt, dass die Steuerschaltung (20) eine Schaltung (300-1) zum Sperren der Übertragung zu jeder Zelle des entsprechenden Aktivierungssignals steuert, so dass in jedem Augenblick nur m der n Aktivierungssignale übertragen werden, **dadurch gekennzeichnet, dass** der Schalter (S) jeder Zelle in einer Resonanzschaltung (10) zur Schaltunterstützung platziert ist, die einen Hilfsschalter (Saux) zum Auslösen einer Resonanzphase (R) umfasst, wobei die Schaltvorrichtung zusätzliche n impulsmodulierte Aktivierungssignale (Pwm1', Pwm2', Pwm3', ..., Pwmn') mit der Taktfrequenz f liefert, und die voneinander um einen fixen zeitlichen Versatz versetzt sind, wobei jedes Aktivierungssignal den Hilfstransistor (Saux) einer entsprechenden Zelle steuert, und eine Schaltung zum Sperren (300'-1) der Übertragung der zusätzlichen Aktivierungssignale derart, dass in jedem Augenblick nur m der n Aktivierungssignale übertragen werden.

2. Netzteilsystem nach Anspruch 1, **dadurch gekennzeichnet, dass** die Steuerschaltung (20) Mittel (20-1) zum Erfassen der Leistung oder des Stroms, die/der in dem Netzteil verbraucht wird, umfasst, und Mittel (20-2) zum Einstufen des erfassten Niveaus im Vergleich zu einer geordneten Folge von n Schwellenwerten (v1, ...v5), die es erlauben, eine Anzahl m von Wegen, die zu aktivieren sind, mit der resultierenden Einstufung übereinstimmen zu lassen, wobei m eine Ganzzahl ist und 1 ≤ m ≤ n ist.

3. Netzteilsystem nach Anspruch 2, **dadurch gekennzeichnet, dass** die Mittel zum Einstufen des erfassten Niveaus n Schwellenwerte bestimmen, die in aufsteigender Reihenfolge von dem ersten kleinsten Wert, zu dem n-ten größten Wert, eingestuft sind und die folgenden Regeln anwenden:
- m ist gleich 1, solange das erfasste Niveau niedriger ist als der erste Schwellenwert (v₁);
- m ist gleich i, solange das erfasste Niveau größer ist als der i-1-te Schwellenwert (vᵢ₋₁) und kleiner als der i-te Schwellenwert (vᵢ), für i als Ganzzahl zwischen 1 und n.

4. Netzteilsystem nach Anspruch 3, **dadurch gekennzeichnet, dass** der n-te Wert (vₙ) einer maximalen Leistung oder einem maximalen Strom in dem Netzteil entspricht.

5. Netzteilsystem nach einem der vorstehenden Ansprüche, wobei die Resonanzschaltung jeder Zelle einen Resonanzkondensator (Cres) umfasst, **dadurch gekennzeichnet, dass** es außerdem ein Element (R) zum Halten der Last des Resonanzkondensators umfasst.

6. Netzteilsystem nach einem der vorstehenden Ansprüche, **dadurch gekennzeichnet, dass** das Halteelement ein Widerstand (R) ist, der zwischen dem Kondensator und einer Ausgangsklemme (B2) des Netzteils angeschlossen ist, wobei der Widerstand bevorzugt einen Wert von mehreren Hundert Kiloohm aufweist.

7. Netzteilsystem nach einem der vorstehenden Ansprüche, wobei die Zellen vom Spannungsaufwärtswandlertyp sind.

8. Netzteilsystem nach einem der Ansprüche 1 bis 6, wobei die Zellen vom Spannungsabwärtswandlertyp sind.

9. Netzteilsystem nach einem der Ansprüche 1 bis 6, wobei die Zellen vom Umkehrer- und/oder Spannungsabwärtswandler-/Spannungsaufwärtswandlertyp sind.

## Claims

1. A power supply system of a load (Z) including a fuel cell (PC) followed by at least one non-isolated power supply with DC DC splitting, of the type including n interlaced cells, n being an integer at least equal to 2, for providing a regulated level of direct voltage to said load under the control of a control device, each cell each forming a conversion path of an input voltage to an output voltage, the control device including a control circuit (20) of a number of paths to be activated as a function of a level of power or current (P_{A}) in the power supply, such that for a number m of paths to be activated strictly less than n, said control circuit of the number m of activated paths, applies a rolling mechanism between the n available paths, providing n pulse-modulated activation signals (Pwm1, Pwm2, Pwm3, ..., Pwmn) of the same splitting frequency f, and offset with respect to one another by a fixed time offset, each for controlling a splitting switch (S) of a cell (BCᵢ), such that the control circuit (20) drives a circuit (300-1) for disabling the transmission to each cell of the corresponding activation signal such that, at each moment, only m activation signals out of n are transmitted, **characterized in that** the splitting switch (S) of each cell being placed in a switching-aid resonant circuit (10) including am auxiliary switch (Saux) for triggering a resonance phase (R), said control device providing n supplementary pulse-modulated activation signals (Pwm1', Pwm2', Pwm3', ...,Pwmn') of the same splitting frequency f, and offset with respect to one another by a fixed time offset, each activation signal controlling the auxiliary transistor (Saux) of a corresponding cell, and a circuit (300'-1) for disabling the transmission of said supplementary activation signals such that, at each moment, only m activation signals out of n are transmitted.

2. The power supply system according to Claim 1, **characterized in that** said control circuit (20) includes means (20-1) for detection of the power or of the current consumed in said power supply, and means (20-2) for classifying the detected level relative to an ordered series of n threshold values (v1, ...v5) making it possible to match a number m of paths to be activated to the resultant classification, m being an integer and 1 ≤ m ≤ n.

3. The power supply system according to Claim 2, **characterized in that** the said means for classifying the detected level determine n threshold values classified in increasing order from the first, the smallest value, to the nth, the greatest value, and apply the following rules:
- m equal to 1 while said detected level is lower than the first threshold value (v₁);
- m equal to i while said detected level is greater than the i-lth threshold value (vᵢ₋₁) and lower than the ith threshold value (vᵢ), for i being an integer comprised between 1 and n.

4. The power supply system according to Claim 3, **characterized in that** the nth value (vₙ) corresponds to a maximum power or current in the power supply.

5. The power supply system according to any one of the preceding claims, in which the resonant circuit of each cell includes a resonance capacitor (Cres), **characterized in that** it further includes a element (R) for maintaining the charge of the resonance capacitor.

6. The power supply system according to Claim 7, **characterized in that** said maintenance element is a resistor (R) connected between the capacitor and an output terminal (B2) of the power supply, said resistor preferably having a value of several hundred kiloohms.

7. The power supply system according to any one of the preceding claims, in which said cells are of the voltage step-up type.

8. The power supply system according to any one of Claims 1 to 6, in which said cells are of the voltage step-down type.

9. The power supply system according to any one of Claims 1 to 6, in which said cells are of the voltage inverter, and/or step-down/step-up type.
